# EUROPEAN PATENT APPLICATION

(11) **EP 2 322 471 A1**
(43) Date of publication of application: **18.05.2011**
(21) Application number: 10187163.0
(22) Date of filing: 11.10.2010
(51) Int. Cl.: C01B 3/56, C01B 3/50, C01B 3/12, C01B 3/52, C10J 3/46

(54) **High hydrogen recovery from residual fuels and biomass**

(30) Priority: 14.10.2009 US 578606
(71) Applicant: L'Air Liquide Société Anonyme pour l'Etude et l'Exploitation des Procédés Georges Claude, 75007 Paris (FR)
(72) Inventor: Vauk, Dennis A., Houston, TX 77095 (US); Grover, Bhadra S., Sugar Land, TX 77479 (US)
(74) Representative: Conan, Philippe Claude

(57) **Abstract**

A method of high hydrogen recovery from syngas from a gasifier is provided. This method includes providing a syngas stream from the gasifier to first hydrogen separation device, wherein the first hydrogen separation device is a pressure swing adsorption device, thereby producing a first high purity hydrogen stream and a tailgas stream. This method also includes increasing the pressure of the tailgas stream in a first compressor; thereby producing a pressurized tailgas stream. This method also includes providing the pressurized tailgas stream to a second hydrogen separation device, thereby producing a second high purity hydrogen stream and a residue stream. This method also includes directing the residue stream to an auxiliary boiler, and combining the first high purity hydrogen product stream and the second high purity hydrogen product stream, thereby producing a high purity hydrogen product stream.

## Description

Hydrogen is most often manufactured using natural gas as a feedstock through the steam methane reforming process. With the current high prices of natural gas it is preferred to manufacture hydrogen from lower cost sources of fuel such as residual fuels. Residual fuels from refineries consist of petroleum coke, visbreaker tar, pitch from deasphalting processes, vacuum residues, atmospheric residues and similar fuels. Coal is also a desirable low cost fuel that can be used to produce hydrogen.

The typical method of producing hydrogen from residual fuels or coal is to gasify it by partially oxidizing it by contact with oxygen and steam or water at elevated temperatures to form a syngas. The syngas consists of hydrogen, carbon monoxide, methane and carbon dioxide. Higher quantities of hydrogen are usually produced by further reacting the syngas with steam over a catalyst to promote the water gas shift reaction of carbon monoxide and steam to hydrogen and carbon dioxide.

After the removal of acid gases such as hydrogen sulfide and carbon dioxide in processes such as amine contactors, Selexol or Rectisol units, the hydrogen still needs to be purified. Hydrogen can be further purified to remove residual amounts of Carbon monoxide through a catalytic reaction to form methane (methanation) and water. This will produce a final product hydrogen stream with about 97% purity. The remaining composition is methane, nitrogen and argon. If higher purity hydrogen (>99%) is desired, the hydrogen is further processed through a Pressure Swing Adsorption (PSA). Due to the limits of PSA technology, the typical hydrogen recovery is about 87-90%.

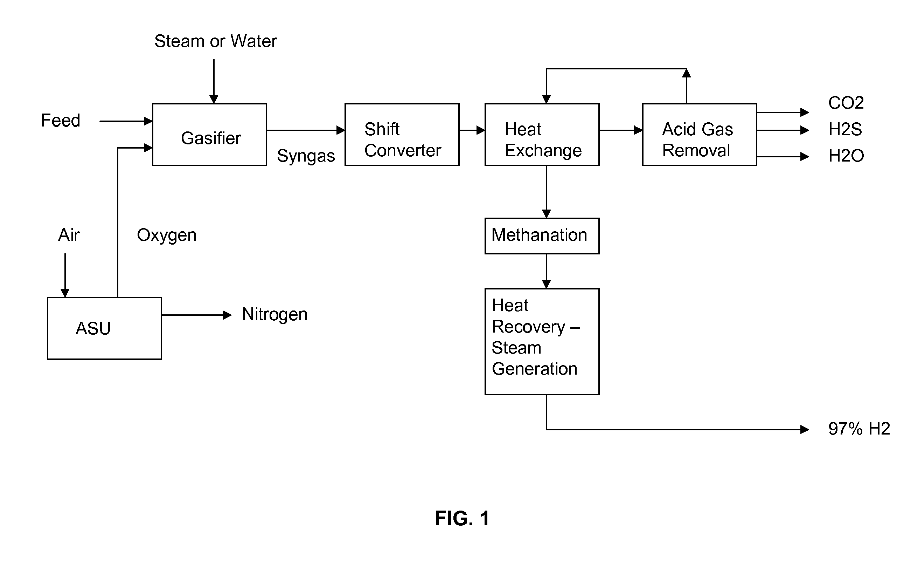

Figure 1 shows a typical hydrogen production from a gasifier with methanation for the final hydrogen purification as known in the prior art. For this process, the hydrogen recovery is near 100%, but the purity is limited by the purity of the oxygen coming in and the degree of conversion in the shift reactor. Typical purity would be about 97%. The disadvantage of this process is that hydrogen purity is significantly lower than that expected by refiners. Refiners have designed their processes for 99.9% purity hydrogen that can be obtained from a PSA. The lower purity is a disadvantage for using methanation as the final purification of the hydrogen.

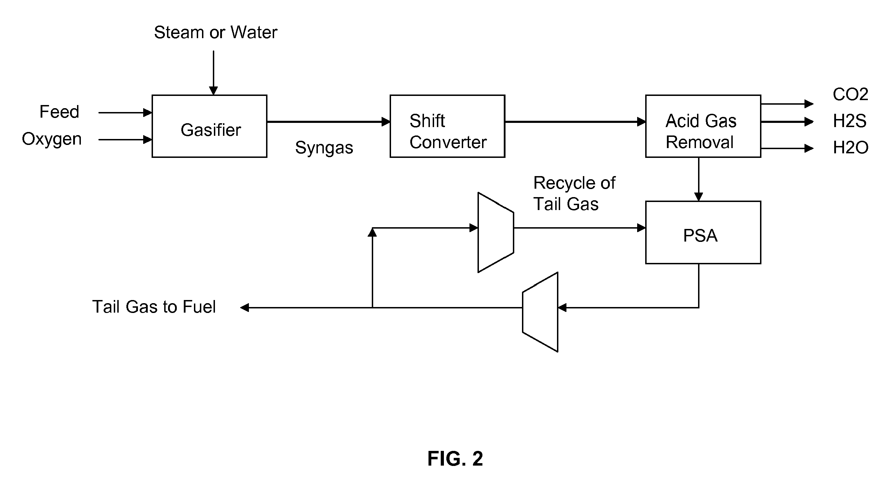

Figure 2 shows a typical hydrogen production from a gasifier with PSA for hydrogen purification as known in the prior art. With a PSA, recovery of hydrogen is limited to about 87-90% for production of 99.9% purity hydrogen. In order to increase the recovery of hydrogen, a recycle compressor can be added to route the tail gas back to the PSA. With recycle, the recovery can be increased to about 92-95%. The ultimate recovery is limited by the amount of purge that needs to be taken to remove the methane, and residual carbon monoxide (from the gasifier and shift reactions), and nitrogen and argon that are brought in with the oxygen.

The present invention provides a process for producing pure hydrogen with higher recovery.

The present invention is a method of high hydrogen recovery from syngas from a gasifier. This method includes providing a syngas stream from the gasifier to first hydrogen separation device, wherein said first hydrogen separation device is a pressure swing adsorption device, thereby producing a first high purity hydrogen stream and a tailgas stream. This method also includes increasing the pressure of said tailgas stream in a first compressor; thereby producing a pressurized tailgas stream. This method also includes providing said pressurized tailgas stream to a second hydrogen separation device, thereby producing a second high purity hydrogen stream and a residue stream. This method also includes directing said residue stream to said gasifier, and combining said first high purity hydrogen product stream and said second high purity hydrogen product stream, thereby producing a high purity hydrogen product stream.
Figure 1 illustrates a typical hydrogen production from a gasifier with methanation for the final hydrogen purification as known in the prior art.
Figure 2 illustrates a typical hydrogen production from a gasifier with PSA for hydrogen purification as known in the prior art.
Figure 3 illustrates one embodiment of the present invention, utilizing two PSAs in series.
Figure 4 illustrates one embodiment of the present invention, utilizing a PSA and a membrane unit in series.

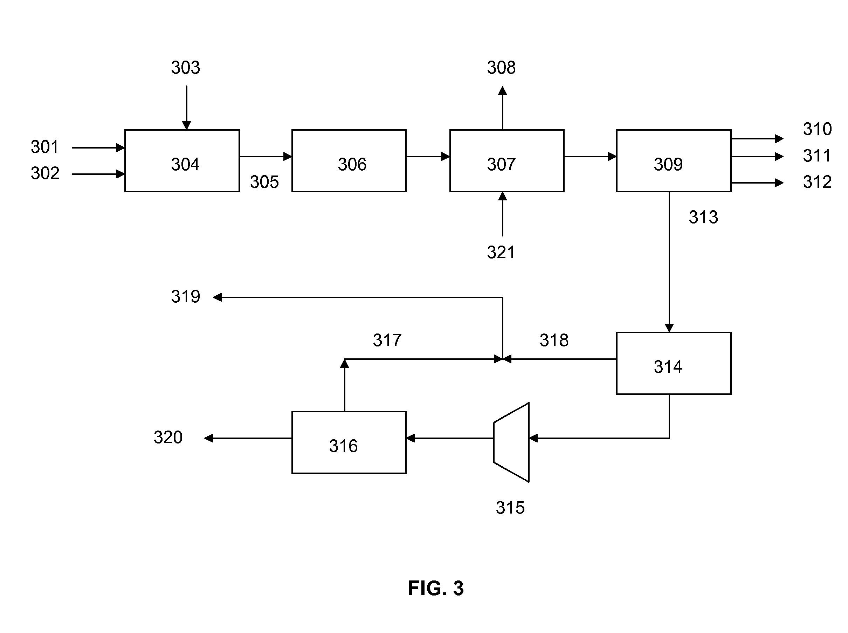

Turning now to figure 3, the present invention is a process for production of high purity hydrogen **319** from refinery residual fuels or biomass **301.** The biomass may include, but is not limited to, agricultural waste, biodegradable wastes, municipal solid waste, and sugar or starch crop waste. In the present invention, a two-sage PSA **314, 316** is used to purify the product hydrogen **319** with a high recovery. Hydrogen is produced by gasification of residual feeds or biomass **301** by combining with oxygen **302** and water or steam **303** at high temperatures and pressure (in a gasifier **304)** to produce a raw syngas stream **305.** In the gasifier reactor **304** the feed is converted to a raw syngas stream **305** comprised of hydrogen, carbon monoxide, carbon dioxide, methane and hydrogen sulfide. Residual argon and nitrogen coming in with the oxygen will also be present in the raw syngas stream **305.**

The raw syngas stream is then contacted with a catalyst in a shift reactor **306** to promote the production of hydrogen from CO and H2O, thereby producing a shifted syngas stream. An indirect contact heat exchanger **307** then transfers heat indirectly between the BFW or other process streams **321** and the hot shifted syngas stream thereby producing a cooled, shifted syngas stream and steam or other elevated temperature process streams **308.** Following the shift reaction (and heat transfer), the acid gases, H2S and CO2, are removed from the cooled shifted syngas stream by contacting with a solvent in an acid gas removal process **309.** While the preferred solvent is methanol, any appropriate solvent known in the art may be utilized. The acid gas removal process **309** results in streams primarily comprising CO2 **310,** H2S **311,** and H2O **312.** Following the syngas acid gas removal, purified syngas stream typically has hydrogen with a purity of about 90 - 99%. The hydrogen is first purified in a first hydrogen separation device **314.** This first hydrogen separation device **314** may be a PSA with about 87 - 90% recovery **318.**

The acid gas removal unit 309 may be split into two parts, first part, removing H2S and other sulfur compounds being placed upstream of the shift reactor 307. Those familiar with the art know trade offs of removing sulfur compounds from downstream to upstream of the shift reactor.

The tail gas from the first hydrogen separation device is further recovered in a second hydrogen separation device **316** after compression in a first compressor **315.** The second hydrogen separation **316** device may be a PSA. The second hydrogen separation device **316** will have a slightly lower recovery (typically about 85 - 88%) than the first one due to the lower hydrogen content in its feed gas. The resulting overall recovery is improved to 98%, while maintaining a purity of over 99.9% H2. The tail gas from the second hydrogen separation device **316,** is then used as fuel **320.** The high purity hydrogen stream **317** is then combined with the hydrogen stream **318** from the first hydrogen separation device **314,** and exported as product **319.**

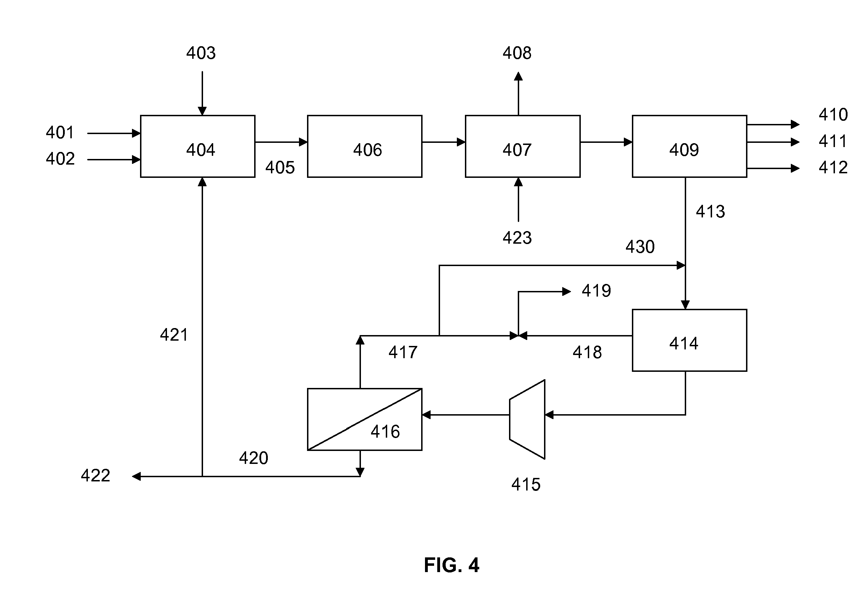

Now turning to figure 4, the present invention is a process for production of high purity hydrogen **419** from refinery residual fuels or biomass **401.** In the present invention a two stage separation process **414, 416** is used to purify the product hydrogen **419** with a high recovery. Hydrogen is produced by gasification of residual feeds or biomass **401** by combining with oxygen **402** and water or steam **403** at high temperatures and pressure (in a gasifier **404)** to produce a raw syngas **405.** In the gasifier reactor **404** the feed is converted to a raw syngas **405** comprised of hydrogen, carbon monoxide, carbon dioxide, methane and hydrogen sulfide.

Residual argon and nitrogen coming in with the oxygen will also be present in the raw syngas **405.** The raw syngas is then contacted with a catalyst in a shift reactor **406** to promote the production of hydrogen from CO and H2O, and thereby producing a shifted syngas stream. An indirect contact heat exchanger **407** then transfers heat indirectly between the BFW or other process streams **423** and the hot shifted syngas stream, thereby producing a cooled, shifted syngas stream and steam or other elevated temperature process streams **408.** Following the shift reaction (and heat transfer), the acid gases, H2S and CO2, are removed from the cooled shifted syngas by contacting with a solvent, preferably methanol in an acid gas removal process **409.** This acid gas removal process **409** results in streams primarily comprising CO2 **410,** H2S **411,** and H2O **412.** Following the syngas acid gas removal, purified syngas stream typically has hydrogen with a purity of about 90 - 99%. The hydrogen is first purified in a first hydrogen separation device **414.** The first hydrogen separation device **414** may be a PSA, with about 87 - 90% recovery **418.**

The tail gas from the first hydrogen separation device **414** is further recovered in a second hydrogen separation device **416** after compression **415.** The second hydrogen separation device **416** may be a membrane unit. The permeate of the membrane **417** is hydrogen of purity 80 - 99%. All or part of the permeate **418** is then combined with the hydrogen stream **418** from the first PSA **414,** and exported as product **419.** All or part of the permeate 418 may be recycled as stream **430** to PSA **414.** The high pressure residue from the membrane **420** is sent to the gasifier **421** for conversion of methane and CO to hydrogen. A smaller fraction of the residue is purged off as a fuel stream **422.** The amount of purge will depend upon the amount of inerts N2 and Ar brought in with oxygen for gasification.

## Claims

**1.** A method of high hydrogen recovery from syngas from a gasifier, comprising;
a) providing a syngas stream from the gasifier to first hydrogen separation device, wherein said first hydrogen separation device is a pressure swing adsorption device, thereby producing a first high purity hydrogen stream and a tailgas stream;
b) increasing the pressure of said tailgas stream in a first compressor; thereby producing a pressurized tailgas stream;
c) providing said pressurized tailgas stream to a second hydrogen separation device, thereby producing a second high purity hydrogen stream and a residue stream; and
d) combining said first high purity hydrogen product stream and said second high purity hydrogen product stream, thereby producing a high purity hydrogen product stream.

**2.** The method of claim 1, wherein said second hydrogen separation device is a pressure swing adsorption device.

**3.** The method of claim 2, further comprising:
d) directing at least part of said residue stream as fuel to an auxiliary heater, and
e) combining said first high purity hydrogen product stream and said second high purity hydrogen product stream, thereby producing a high purity hydrogen product stream.

**4.** The method of claim 1, wherein said second hydrogen separation device is a membrane-type separation device.

**5.** The method of claim 4, further comprising:
d') directing at least a portion of said high pressure residue - stream to said gasifier, as feed, directing the remaining portion of said residue stream to be used as a fuel stream, and
e) combining said first high purity hydrogen product stream and said second high purity hydrogen product stream, thereby producing a high purity hydrogen product stream.

**6.** The method of claim 1, further comprising:
i. providing a feed stream, an O2 stream and a H20 stream to said gasifier, thereby producing a raw syngas stream,
ii. introducing said raw syngas stream into a shift reactor, thereby producing a shifted syngas stream,
iii. introducing said shifted syngas stream to an indirect contact heat exchanger, wherein the shifted syngas stream exchanges heat with said high purity hydrogen product stream, and thereby producing a cooled shifted syngas stream, (syngas is cooled by raising steam or heating other process gases)
iv. introducing said cooled shifted syngas stream to an acid gas removal system, thereby producing a CO2 stream, a H2S stream, a H2O stream, and a purified syngas stream, and
a) providing said purified syngas stream from the gasifier to first hydrogen separation device, wherein said first hydrogen separation device is a pressure swing adsorption device, thereby producing a first high purity hydrogen stream and a first tailgas stream.

**7.** The method of claim 6, wherein said feed stream comprises refinery residual fuels selected from the group consisting of petroleum coke, visbreaker tar, pitch from deasphalting processes, vacuum residues, and atmospheric residues.

**8.** The method of claim 6, wherein said feed stream comprises biomass.

**9.** The method of claim 8, wherein said biomass is selected from the group consisting of agricultural waste, biodegradable wastes, municipal solid waste, and sugar and starch crop waste.
